(19)

Europäisches
Patentamt

European
Patent Office

Office européen
des brevets

(11)  **EP 4 606 619 A1**

(12)  **EUROPEAN PATENT APPLICATION**

(43) Date of publication:
**27.08.2025   Bulletin 2025/35**

(21) Application number: **25158017.1**

(22) Date of filing: **14.02.2025**

(51) International Patent Classification (IPC):
**B60L 3/00** *(2019.01)*      **B60L 15/20** *(2006.01)*
**B60L 58/12** *(2019.01)*     **B60W 30/188** *(2012.01)*
**B60Q 5/00** *(2006.01)*

(52) Cooperative Patent Classification (CPC):
**B60L 15/20; B60L 3/00; B60L 3/0046; B60L 3/12;**
**B60L 15/2054; B60L 58/12; B60Q 5/00;**
**B60Q 5/005; B60Q 5/006; G10K 15/02;**
B60L 2240/14; B60L 2240/16; B60L 2240/24;
B60L 2240/421; B60L 2240/423;      (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.02.2024   JP 2024023744**

(71) Applicant: **TOYOTA JIDOSHA KABUSHIKI**
**KAISHA**
**Toyota-shi, Aichi-Ken, 471-8571 (JP)**

(72) Inventor: **MAEDA, Toshio**
**Toyota-shi, 471-8571 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54)  **VEHICLE CONTROL METHOD AND VEHICLE CONTROL DEVICE WITH SIMULATED SOUND REPRODUCTION**

(57)      A vehicle control method includes detecting occurrence of a driving event specific to a virtual mobility when a reproduction mode for reproducing behavior of the virtual mobility in a driving event of the virtual mobility is selected as a driving mode of a battery electric vehicle (10), and performing event reproduction control including driving of an in-vehicle device simulating a behavior characteristic of the virtual mobility in the specific driving event and reproduction of a pseudo event sound simulating a sound in the specific driving event, when the occurrence of the specific driving event is detected. In the event reproduction control, the reproduction of the pseudo event sound is started prior to the driving of the in-vehicle device.

FIG. 6

EP 4 606 619 A1

(52) Cooperative Patent Classification (CPC): (Cont.)
B60L 2240/461; B60L 2240/486; B60L 2240/545;
B60L 2240/547; B60L 2240/549; B60L 2250/16;
B60L 2250/24; B60L 2250/26; B60L 2260/30;
B60L 2260/34; B60L 2270/145

**Description**

BACKGROUND OF THE INVENTION

1. Field of the Invention

The present disclosure relates to a vehicle control method and a vehicle control device applied to a battery electric vehicle using an electric motor as a traveling power device.

2. Description of Related Art

Japanese Unexamined Patent Application Publication No. 2011-215437 (JP 2011-215437 A) discloses a control device installed in a battery electric vehicle. The control device calculates an engine rotation speed of a virtual engine based on traveling information of the battery electric vehicle and a simulation result of an operation of a component of a virtual engine vehicle. In addition, the control device controls a virtual engine sound for a vehicle cabin based on the calculated engine rotation speed. In controlling the virtual engine sound, based on the simulation result of the operation of the component of the virtual engine vehicle, a sound effect corresponding to the operation is decided. Then, the decided sound effect is added to the virtual engine sound.

SUMMARY OF THE INVENTION

A case where a sound source of the virtual engine sound is a mobility other than an engine vehicle, such as an aircraft, a railroad vehicle, and a ship, is considered. The mobility, such as an aircraft, a railroad vehicle, and a ship, includes a vehicle that uses an engine as a main power source, as with the engine vehicle. Therefore, in a case where the virtual engine sound of such a mobility serving as a sound source is controlled, a sense of realism as if the mobility is being driven can be produced.

In a case where a virtual mobility that uses an engine as a main power source is a sound source, providing a driver of a battery electric vehicle with information different from a sound, such as a virtual engine sound, is considered. For example, while the battery electric vehicle is turning, a seat surface of a driver's seat is tilted to reproduce turning of the virtual mobility. For example, vibration is generated in the driver's seat to reproduce an impact received when an aircraft lands. For example, vibration is generated in the driver's seat to reproduce an impact of a coupler received when a railroad vehicle with a cargo vehicle departs. Such pseudo-reproduction of driving events is expected to enhance the sense of realism.

When there is reproduction information of the driving event of the virtual mobility, a sense of realism as if a virtual mobility that does not use an engine as a main power source is being driven can be also produced. For example, a train is considered as the virtual mobility. The train is a mobility that uses a motor as a main power source. Vibration is generated in the driver's seat to reproduce an impact received from a joint of a track when the train travels, whereby a sense of realism as if the train is being driven can be produced.

The driving events listed above include a driving event common to the battery electric vehicle and the virtual mobility and a driving event specific to the virtual mobility. A representative example of the driving event common to the battery electric vehicle and the virtual mobility is turning of an engine vehicle. A representative example of the driving event specific to the virtual mobility is landing of an aircraft. A significant difference between the driving event common to the battery electric vehicle and the virtual mobility and the driving event specific to the virtual mobility lies in whether the event is caused by a driving operation of the driver or a driving state of the battery electric vehicle. Therefore, in a case where the driving event specific to the virtual mobility is reproduced, the driver who receives the reproduction information may feel uncomfortable or may misunderstand that the battery electric vehicle has failed.

The present disclosure has been made in consideration of the problem. A first aspect of the present disclosure is to provide a technique of, when a driving event specific to a virtual mobility is reproduced in a battery electric vehicle in a pseudo manner, suppressing erroneous transmission of an intention of the reproduction to a driver of the battery electric vehicle.

A first aspect of the present disclosure is a vehicle control method applied to a battery electric vehicle that uses an electric motor as a traveling power device and has the following features.

The vehicle control method includes detecting occurrence of a driving event specific to a virtual mobility when a reproduction mode for reproducing behavior of the virtual mobility in a driving event of the virtual mobility is selected as a driving mode of a battery electric vehicle, and performing event reproduction control including driving of an in-vehicle device simulating a behavior characteristic of the virtual mobility in the specific driving event and reproduction of a pseudo event sound simulating a sound in the specific driving event, when the occurrence of the specific driving event is detected. In the event reproduction control, the reproduction of the pseudo event sound is started prior to the driving of the in-vehicle device.

In the vehicle control method, the driving of the in-vehicle device may be started after the pseudo event sound reproduced by executing the event reproduction control is detected via an indoor microphone of the battery electric vehicle.

In the vehicle control method, when a setting state of a sound reproducing device configured to reproduce the pseudo event sound in the battery electric vehicle is a mute state, the mute state may be released before the reproduction of the pseudo event sound is started in the event reproduction control.

The vehicle control method may further include detecting occurrence of a driving event common to the virtual mobility and the battery electric vehicle when a reproduction mode for reproducing a sound of the virtual mobility in the driving event of the virtual mobility is selected as the driving mode, and performing event reproduction control including at least one of driving of the in-vehicle device simulating a behavior characteristic of the virtual mobility in the common driving event and reproduction of a pseudo event sound simulating a sound in the common driving event, when the occurrence of the common driving event is detected.

In the vehicle control method, the virtual mobility may include a railroad vehicle with a cargo vehicle. The specific driving event may include a departure event of the railroad vehicle detected by start of the battery electric vehicle and a stop event of the railroad vehicle detected by stop of the battery electric vehicle.

In the vehicle control method, the virtual mobility may include a railroad vehicle. The specific driving event may include a track traveling event of the railroad vehicle detected by traveling of the battery electric vehicle.

In the vehicle control method, the virtual mobility may include an aircraft. The specific driving event may include a landing event of the aircraft at a destination, the landing event being detected when a distance from the battery electric vehicle to the destination is within a predetermined distance.

A second aspect of the present disclosure is a vehicle control device applied to a battery electric vehicle that uses an electric motor as a traveling power device and has the following features.

The vehicle control device includes a processing circuit that performs various kinds of processing. The processing circuit is configured to detect occurrence of a driving event specific to a virtual mobility when a reproduction mode for reproducing behavior of the virtual mobility in a driving event of the virtual mobility is selected as a driving mode of the battery electric vehicle, perform event reproduction control including driving of an in-vehicle device simulating a behavior characteristic of the virtual mobility in the specific driving event and reproduction of a pseudo event sound simulating a sound in the specific driving event, when the occurrence of the specific driving event is detected. In the event reproduction control, the reproduction of the pseudo event sound is started prior to the driving of the in-vehicle device.

In the vehicle control device, the processing circuit may be configured to start the driving of the in-vehicle device after the pseudo event sound reproduced by executing the event reproduction control is detected via an indoor microphone of the battery electric vehicle.

In the vehicle control device, the processing circuit may be configured to, when a setting state of a sound reproducing device configured to reproduce the pseudo event sound in the battery electric vehicle is a mute state, release the mute state before the reproduction of the pseudo event sound is started in the event reproduction control.

In the vehicle control device, the processing circuit may be further configured to detect occurrence of a driving event common to the virtual mobility and the battery electric vehicle when a reproduction mode for reproducing a sound of the virtual mobility in the driving event of the virtual mobility is selected as the driving mode, and perform event reproduction control including at least one of driving of the in-vehicle device simulating a behavior characteristic of the virtual mobility in the common driving event and reproduction of a pseudo event sound simulating a sound in the common driving event, when the occurrence of the common driving event is detected.

In the vehicle control device, the virtual mobility may include a railroad vehicle with a cargo vehicle. In this case, the processing circuit may be configured to detect occurrence of a departure event of the railroad vehicle detected by start of the battery electric vehicle and a stop event of the railroad vehicle detected by stop of the battery electric vehicle as the specific driving event.

In the vehicle control device, the virtual mobility may include a railroad vehicle. In this case, the processing circuit may be configured to detect occurrence of a track traveling event of the railroad vehicle detected by traveling of the battery electric vehicle as the specific driving event.

In the vehicle control device, the virtual mobility may include an aircraft. In this case, the processing circuit may be configured to detect occurrence of a landing event of the aircraft at a destination as the specific driving event, the landing event being detected when a distance from the battery electric vehicle to the destination is within a predetermined distance.

According to the present disclosure, when the event reproduction control including the reproduction of the pseudo event sound simulating the sound in the driving event specific to the virtual mobility and the driving of the in-vehicle device simulating the behavior characteristic of the virtual mobility in the same driving event is performed, the reproduction of the pseudo event sound is started prior to the driving of the in-vehicle device. Therefore, when the in-vehicle device is driven, the pseudo event sound is delivered to the driver of the battery electric vehicle before the driving is started. Accordingly, an erroneous transmission of an intention of the driving of the in-vehicle device in the event reproduction control to the driver can be suppressed.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram showing a configuration example of a battery electric vehicle to which a vehicle control device according to an embodiment is applied;

FIG. 2 is a block diagram showing an example of a basic functional configuration of the vehicle control device;

FIG. 3 is a block diagram showing another example of a basic functional configuration of the vehicle control device;

FIG. 4 is a block diagram showing an example of a functional configuration of a vehicle control device particularly related to event reproduction control;

FIG. 5 is a graph illustrating an adjustment example of timing of output of a control command of a reproduction device and event sound data when occurrence of a driving event specific to a virtual mobility is detected;

FIG. 6 is a flowchart showing a flow of processing particularly related to the embodiment;

FIG. 7 is a block diagram showing a first configuration example of a power control system of the battery electric vehicle;

FIG. 8 is a graph showing examples of an engine model, a clutch model, and a transmission model that configure an MT vehicle model;

FIG. 9 is a graph showing a torque characteristic of an electric motor implemented by motor control using the MT vehicle model as compared with a torque characteristic of the electric motor implemented by normal motor control as the battery electric vehicle; and

FIG. 10 is a block diagram showing a second configuration example of the power control system of the battery electric vehicle.

DETAILED DESCRIPTION OF EMBODIMENTS

An embodiment of the present disclosure will be described with reference to the accompanying drawings. In addition, the same or corresponding configurations in each drawing are denoted by the same reference numerals and description thereof will be simplified or will not be repeated.

1. Configuration Example and Reproduction of Virtual Mobility Sound

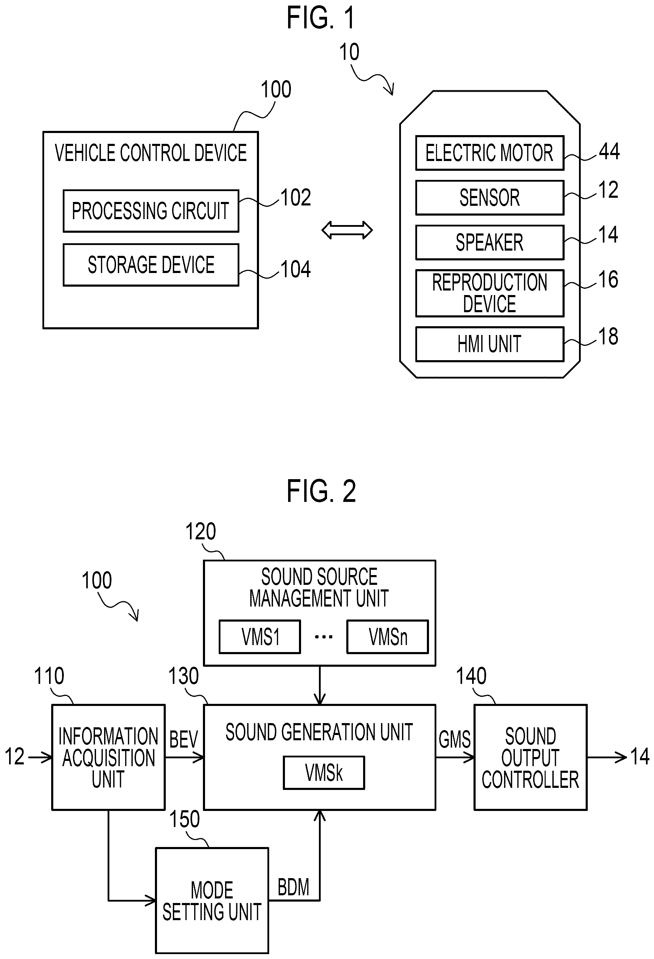

FIG. 1 is a conceptual diagram showing a configuration example of a battery electric vehicle including a vehicle control device according to the embodiment of the present disclosure. A vehicle control device 100 according to the embodiment is applied to a battery electric vehicle 10. The battery electric vehicle 10 includes an electric motor 44. Examples of the electric motor 44 include a brushless DC motor and a three-phase alternating current synchronous motor. The battery electric vehicle 10 uses the electric motor 44 as a traveling power device.

In addition, the battery electric vehicle 10 includes various sensors 12. The various sensors 12 include an operation state sensor, such as an accelerator position sensor, a brake position sensor, and a shift position sensor, and a traveling state sensor, such as a wheel speed sensor, an acceleration sensor, and a rotation speed sensor. The accelerator position sensor detects an operation amount of an accelerator pedal (accelerator operation amount). The brake position sensor detects an operation amount of a brake pedal. The shift position sensor detects a shift position. The wheel speed sensor detects a rotation speed of wheels of the battery electric vehicle 10. The acceleration sensor detects a lateral acceleration or a longitudinal acceleration of the battery electric vehicle 10. The rotation speed sensor detects a rotation speed of the electric motor 44.

In addition, the various sensors 12 include a position sensor, such as a global navigation satellite system (GNSS) sensor, and a recognition sensor, such as a camera, a radar, and a laser imaging detection and ranging (LIDAR). The GNSS sensor detects a position and a posture of the battery electric vehicle 10. The camera images at least a region in front of the battery electric vehicle 10. The radar and the LIDAR recognize a situation around the battery electric vehicle 10.

In addition, the battery electric vehicle 10 includes a speaker 14. The speaker 14 outputs a sound into a vehicle cabin of the battery electric vehicle 10. The speaker 14 includes, for example, a front speaker provided in front of the vehicle cabin and a rear speaker provided behind the vehicle cabin. The total number of speakers constituting the speaker 14 and a layout of the speaker 14 can be optionally changed.

The battery electric vehicle 10 further includes a reproduction device 16. The reproduction device 16 is a device that reproduces a behavior characteristic of a virtual mobility in a driving event of the virtual mobility in a pseudo manner. Examples of the reproduction device 16 include a seat vibration device that vibrates a driver's seat of the battery electric vehicle 10, a seat adjustment device that adjusts a height and an inclination of a seat surface of the driver's seat, and a steering vibration device that vibrates a steering wheel. The reproduction device 16 is an in-vehicle device existing in the battery electric vehicle 10 or an in-vehicle device dedicated to reproduction. Another example of the reproduction device 16 is a drive force transmission device, such as the electric motor 40 or a transmission. The electric motor 40 and the transmission are in-vehicle devices existing in the battery electric vehicle 10, and can vibrate the driver's seat by performing predetermined control.

In the present disclosure, the virtual mobility refers to a mobility other than the battery electric vehicle 10. Examples of the mobility other than the battery electric vehicle 10 include an engine vehicle, an aircraft, a railroad vehicle, and a ship. The mobility, such as an aircraft, a railroad vehicle, and a ship, includes a vehicle that uses an engine as a main power source, as with the engine vehicle. In addition, the mobility, such as an aircraft, a railroad vehicle, and a ship, includes a mobility that uses a combination of an engine and a motor or a motor as a main power source.

In addition, the battery electric vehicle 10 further includes a human machine interface (HMI) unit 18. The HMI unit 18 is an input/output terminal for providing information to a driver of the battery electric vehicle 10 and receiving information from the driver. The HMI unit 18 includes, for example, an input device, a display device, and a microphone. Examples of the input device include a touch panel, a keyboard, a switch, and a button. The information provided to the driver includes information regarding a traveling state of the battery electric vehicle 10 and information specific to the present disclosure. The specific information specific to the present disclosure includes information regarding a driving mode or a control mode of the battery electric vehicle 10. The information is provided to the driver by using the display device. The information is received from the driver by using the input device and the microphone.

The vehicle control device 100 generates a sound related to the virtual mobility (hereinafter, also referred to as a "virtual mobility sound"). In addition, the vehicle control device 100 outputs the generated virtual mobility sound from the speaker 14. For example, the vehicle control device 100 generates a sound simulating a sound generated from a power source of the virtual mobility (hereinafter, also referred to as "pseudo power source sound") as the virtual mobility sound, and outputs the sound from the speaker 14. In another example, the vehicle control device 100 generates a sound simulating a sound simulating a sound in the driving event of the virtual mobility (hereinafter, also referred to as "pseudo event sound") as the virtual mobility sound, and outputs the sound from the speaker 14. In addition, in still another example, the vehicle control device 100 generates both the pseudo power source sound and the pseudo event sound, and outputs the pseudo power source sound and the pseudo event sound from the speaker 14.

The driving event of the virtual mobility includes a driving event common to the virtual mobility and the battery electric vehicle 10 and a driving event specific to the virtual mobility. Examples of the driving event common to the virtual mobility and the battery electric vehicle 10 (hereinafter, also referred to as a "common driving event") include a start event, a stop event, a constant speed cruising event, an acceleration event, a deceleration event, a turning event, and a backward event. In the common driving event, a sound is generated from a power source of the virtual mobility, a mobility body, a surrounding environment of the virtual mobility, and the like. The vehicle control device 100 generates the pseudo event sound (excluding the pseudo power source sound) in the common driving event, and outputs the pseudo event sound from the speaker 14.

As in the common driving event, even in the driving event specific to the virtual mobility (hereinafter, also referred to as a "specific driving event"), a sound is generated from a power source of the virtual mobility, a mobility body, a surrounding environment of the virtual mobility, and the like. The vehicle control device 100 generates the pseudo event sound (excluding the pseudo power source sound) in the specific driving event, and outputs the pseudo event sound from the speaker 14. Here, examples of the specific driving event include a landing event of an aircraft at an airport, a start event and a stop event of a railroad vehicle with a cargo vehicle, and a track traveling event of a railroad vehicle. In the landing event of the aircraft, an impact sound is generated by landing of the aircraft. In the start event and the stop event of the railroad vehicle with the cargo vehicle, an impact sound of a coupler between the cargo vehicles is generated. In the track traveling event of the railroad vehicle, an impact sound produced from a joint of a track is generated.

The entirety of the vehicle control device 100 may be mounted in the battery electric vehicle 10. As another example, at least a part of the vehicle control device 100 may be included in a management server outside the battery electric vehicle 10. In this case, the vehicle control device 100 may remotely generate the virtual mobility sound and receive the generated virtual mobility sound to output the generated virtual mobility sound from the speaker 14.

In general, the vehicle control device 100 includes at least one processing circuit 102 and at least one storage device 104. Examples of the processing circuit 102 include at least one of a general purpose processor, a specific purpose processor, an integrated circuit, an application specific integrated circuit (ASIC), a central processing unit (CPU), a conventional circuit, and a combination thereof. The processing circuit 102 is hardware programmed to implement the functions described below or hardware that executes the functions described below. The storage device 104 stores various pieces of information. Examples of the storage device 104 include a volatile memory, a non-volatile memory, a hard disk drive (HDD), and a solid state drive (SSD).

FIG. 2 is a block diagram showing an example of a basic functional configuration of the vehicle control device 100. The vehicle control device 100 includes an information acquisition unit 110, a sound source management unit 120, a sound generation unit 130, a sound output controller 140, and a mode setting unit 150 as functional blocks. These functional blocks are implemented, for example, by cooperation between the processing circuit 102 and the storage device 104.

The information acquisition unit 110 acquires information BEV regarding the battery electric vehicle 10. The information BEV includes information regarding a traveling state of the battery electric vehicle 10, information regarding a traveling environment of the battery electric vehicle 10, information regarding a driving mode or a control mode of the battery electric vehicle 10, and the like. The information BEV is detected by the various sensors 12 and the HMI unit 18. A part of the information regarding the traveling environment of the battery electric vehicle 10 may be acquired by combining the information detected by the various sensors 12 (for example, position information of the battery electric vehicle 10) with map data.

In addition, the information BEV includes a virtual engine rotation speed Ne. Here, it is assumed that the battery electric vehicle 10 uses a virtual engine as a traveling power device. The virtual engine rotation speed Ne is a rotation speed of the virtual engine when assumption is made that the battery electric vehicle 10 is driven by the virtual engine. For example, the information acquisition unit 110 may calculate the virtual engine rotation speed Ne to be increased as the wheel speed is increased. In addition, when the battery electric vehicle 10 has a manual mode (MT mode) described below, the information acquisition unit 110 may calculate the virtual engine rotation speed Ne in the manual mode based on a wheel speed, a total reduction ratio, and a slip ratio of a virtual clutch. Details of the calculation method of the virtual engine rotation speed Ne in the manual mode will be described below.

The sound source management unit 120 stores sound source data VMS (VMS1, ... ,VMSn) of the virtual mobility used to generate the virtual mobility sound. The sound source management unit 120 is mainly implemented by the storage device 104. Typically, the sound source data VMS includes a plurality of kinds of sound source data. The sound source data includes, for example, sound source data of a sound caused by engine combustion (for low rotation speed, for medium rotation speed, and for high rotation speed), sound source data of a sound caused by motor rotation (for low rotation speed, for medium rotation speed, and for high rotation speed), sound source data of a sound caused by an operation of an input device, such as a gear and a clutch (for low rotation speed, for medium rotation speed, and for high rotation speed), and sound source data of a noise sound. Each sound source data is generated in advance through a simulation based on a power source model and a vehicle body model of the virtual mobility. Each sound source data can be flexibly adjusted. That is, at least one of a sound pressure and a frequency of the sound indicated by the sound source data can be flexibly adjusted.

The sound generation unit 130 (virtual mobility sound simulator) is a simulator that generates the virtual mobility sound. The sound generation unit 130 acquires at least a part of the information BEV from the information acquisition unit 110. In particular, the sound generation unit 130 acquires information on the virtual engine rotation speed Ne or a vehicle speed from the information acquisition unit 110. In addition, the sound generation unit 130 reads sound source data VMSk of the virtual mobility

$(1 \leq k \leq n)$ from the sound source management unit 120. The sound source data VMSk is sound source data of the virtual mobility specified by driving mode data BDM of the battery electric vehicle 10 output from the mode setting unit 150. The sound generation unit 130 generates a virtual mobility sound corresponding to the driving state (the virtual engine rotation speed Ne or the vehicle speed) of the battery electric vehicle 10 by combining one or more pieces of sound source data included in the sound source data VMSk. Mobility sound data GMS is data indicating the generated virtual mobility sound.

The generation of the pseudo power source sound is a well-known technique, and a method of generating the pseudo power source sound applicable to the present disclosure is not particularly limited. For example, the pseudo power source sound may be generated by a well-known sound simulator used in a game or the like. A method may be adopted in which a map of the virtual engine rotation speed Ne and a frequency and a map of a virtual engine torque and a sound pressure are prepared, the frequency of the pseudo power source sound is increased or decreased in proportion to the virtual engine rotation speed Ne, and the pseudo power source sound is increased or decreased in proportion to the virtual engine torque.

The sound output controller 140 receives power source sound data MDS generated by the sound generation unit 130. Then, the sound output controller 140 outputs the power source sound data MDS from the speaker 14. When the power source sound data MDS is output, the sound output controller 140 controls the sound pressure of the pseudo power source sound by controlling an amplifier. The sound output controller 140 changes the frequency of the pseudo power source sound by controlling a frequency modulator (FMC).

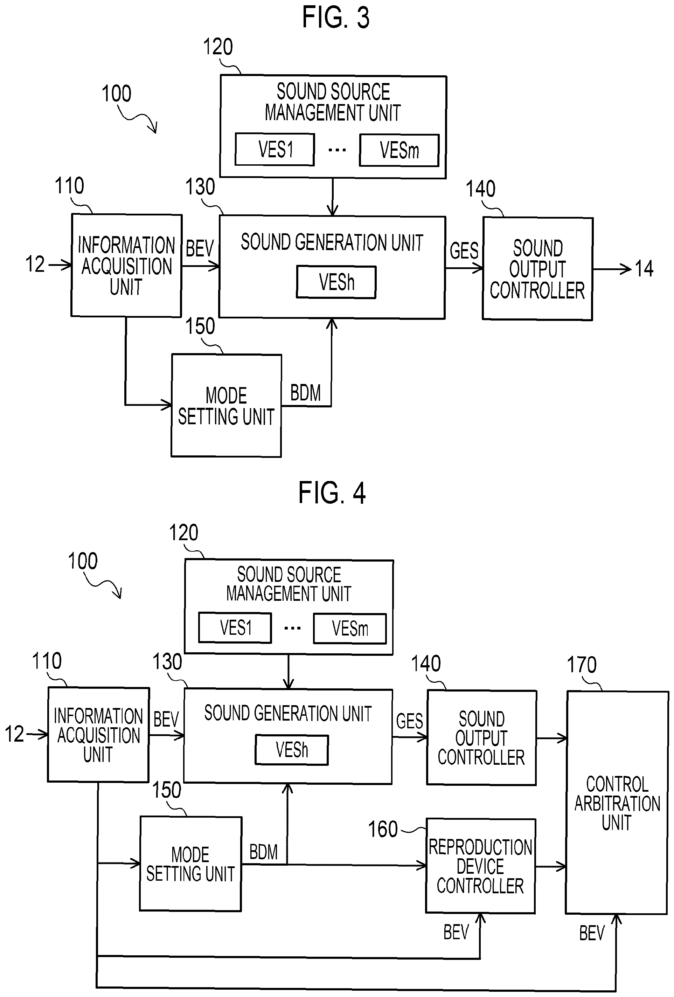

FIG. 3 is a block diagram showing another example of a basic functional configuration of the vehicle control device 100. In the example shown in FIG. 3, the sound source management unit 120 stores sound source data VES (VES1, ... ,VESm) in the driving event of the virtual mobility. The sound source data VES is generated in advance through a simulation based on a vehicle body model corresponding to the virtual mobility and an environment model of the virtual mobility. The sound source data VES may be generated by separately collecting and editing an environmental sound (for example, a notification sound of a departure bell or an announcement sound by an occupant of the virtual mobility) in the driving event of the virtual mobility. Each sound source data can be flexibly adjusted. That is, at least one of a sound pressure and a frequency of the sound indicated by the sound source data can be flexibly adjusted.

In the example shown in FIG. 3, the sound generation unit 130 acquires at least a part of the information BEV from the information acquisition unit 110. In particular, the sound generation unit 130 acquires information needed to detect the occurrence of the driving event of the virtual mobility from the information acquisition unit 110. In addition, the sound generation unit 130 reads sound source data VESh of the virtual mobility ($1 \leq$ h $\leq$ m) from the sound source management unit 120. The sound source data VESh is sound source data of the virtual mobility specified by the driving mode data BDM. The sound generation unit 130 generates a pseudo event sound corresponding to the driving event (that is, the common driving event or the specific driving event) of which generation is detected by combining one or more pieces of sound source data included in the sound source data VESh. Event sound data GES is data indicating the generated pseudo event sound.

2. Event Reproduction Control

In the embodiment, when the occurrence of the driving event of the virtual mobility is detected, control (event reproduction control) of reproducing the driving event is performed. In the event reproduction control, at least one of the driving of the reproduction device 16 simulating a behavior characteristic of the virtual mobility in the driving event and the reproduction of the pseudo event sound simulating the sound in the driving event is performed.

FIG. 4 is a block diagram showing an example of a functional configuration of the vehicle control device 100 particularly related to the event reproduction control. In the example shown in FIG. 4, the vehicle control device 100 includes a reproduction device controller 160 and a control arbitration unit 170 in addition to the functional blocks described in FIGS. 2 and 3. These functional blocks are implemented, for example, by cooperation between the processing circuit 102 and the storage device 104.

The reproduction device controller 160 acquires at least a part of the information BEV from the information acquisition unit 110. In particular, the reproduction device controller 160 acquires information needed to detect the driving event of the virtual mobility from the information acquisition unit 110. In addition, the reproduction device controller 160 generates a control command according to a behavior characteristic pattern of the virtual mobility specified by the driving mode data BDM when the occurrence of the driving event is detected. The behavior characteristic pattern is generated in advance through a simulation based on a vehicle body model corresponding to the virtual mobility and an environment model of the virtual mobility. The generated control command is transmitted to the control arbitration unit 170.

The control arbitration unit 170 receives the control command from the reproduction device controller 160 and outputs the control command to the reproduction device 16. In addition, the control arbitration unit 170 receives the event sound data GES from the sound output controller 140 and outputs the event sound data GES to the speaker 14. When both the control command from the reproduction device controller 160 and the event sound data GES are received, the control arbitration unit 170 determines whether or not output of the control command and the event sound data GES is possible based on the information BEV. For example, in a situation in which emergency vehicle control in which a safety device is operated is being performed, the output of the control command and the event sound data GES is prohibited. When the output of the control command and the event sound data GES is not particularly prohibited, the control arbitration unit 170 adjusts timing of the output.

The timing of the output of the control command and the event sound data GES is particularly significant when the occurrence of the specific driving event is detected. The occurrence of the common driving event is caused by a driving operation by the driver or a driving state of the battery electric vehicle 10. In contrast, the specific driving event occurs without being caused by the driving operation or the driving state. Therefore, when the control of the reproduction device 16 is started with the detection of the occurrence of the specific driving event, the control of the reproduction device 16 may cause the driver to feel uncomfortable or to misunderstand that the battery electric vehicle 10 has failed.

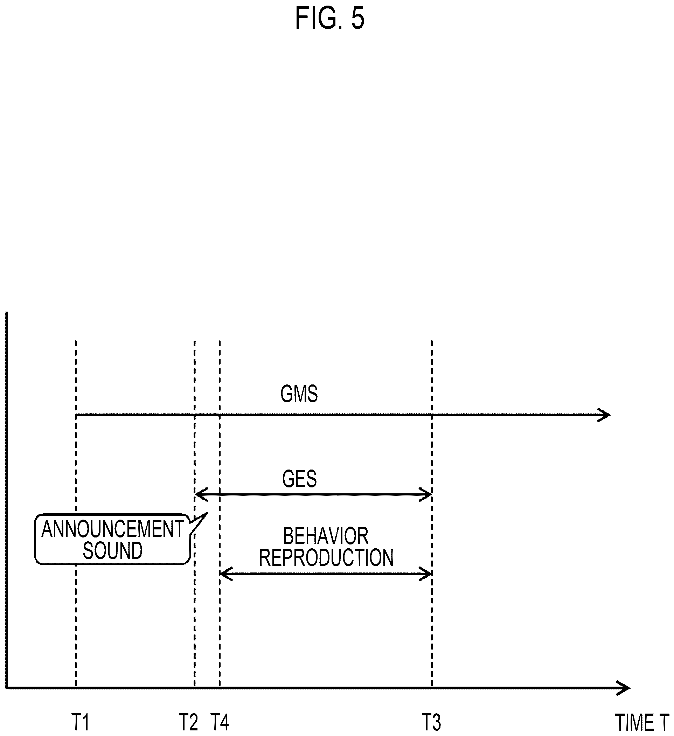

Therefore, in the embodiment, when the occurrence of the specific driving event is detected, the output of the event sound data GES is started prior to the start of the control of the reproduction device 16. FIG. 5 is a graph illustrating an adjustment example of the timing of the output of the control command by the control arbitration unit 170 and the event sound data GES. In the example shown in FIG. 5, the mobility sound data GMS is also output. The output of the mobility sound data GMS continues from time T1.

As described above, when the occurrence of the specific driving event is detected, the event sound data GES is generated and output from the speaker 14. In the example shown in FIG. 5, with the detection of the occurrence of the specific driving event, the output of the event sound data GES continues between time T2 and time T3. The control of the reproduction device 16 is started at time T4. Time T4 is after time T2, and the adjustment of time T4 is performed by the control arbitration unit 170. The control of the reproduction device 16 is started at time T4, whereby it is possible to suppress erroneous transmission of an intention of the driving of the reproduction device 16 in the event reproduction control to the driver.

In the example shown in FIG. 5, data of an announcement sound is included in the event sound data GES output between time T2 and time T4. The announcement sound is a sound for notifying of the start of the control of the reproduction device 16. The announcement sound may be an environmental sound (for example, a notification sound of a departure bell or an announcement sound by an occupant of the virtual mobility) generated in the specific driving event, or may be a separately generated alert sound. It is expected that the above effects are enhanced by reproducing the announcement sound.

Time T4 at which the control of the reproduction device 16 is started may be after the control arbitration unit 170 detects the output of the event sound data GES in the vehicle cabin. In this case, the output of the event sound data GES is detected by using an indoor microphone of the battery electric vehicle 10. Then, time T4 is set based on a detection signal included in the information BEV. It is expected that the above effects are enhanced by setting time T4 after the output of the event sound data GES is confirmed.

As a case where the output of the event sound data GES is not performed in the vehicle cabin, a case where a setting state of the speaker 14 is set to a mute state (including a small sound state close to the mute state) is assumed. Therefore, it is desirable to detect the setting state of the speaker 14 based on the information BEV and to release the mute state before time T2 when the setting state is the mute state. The mute state is released, whereby the event sound data GES can be reliably output from the speaker 14. The mute state is released, for example, by the control arbitration unit 170.

3. Processing Example

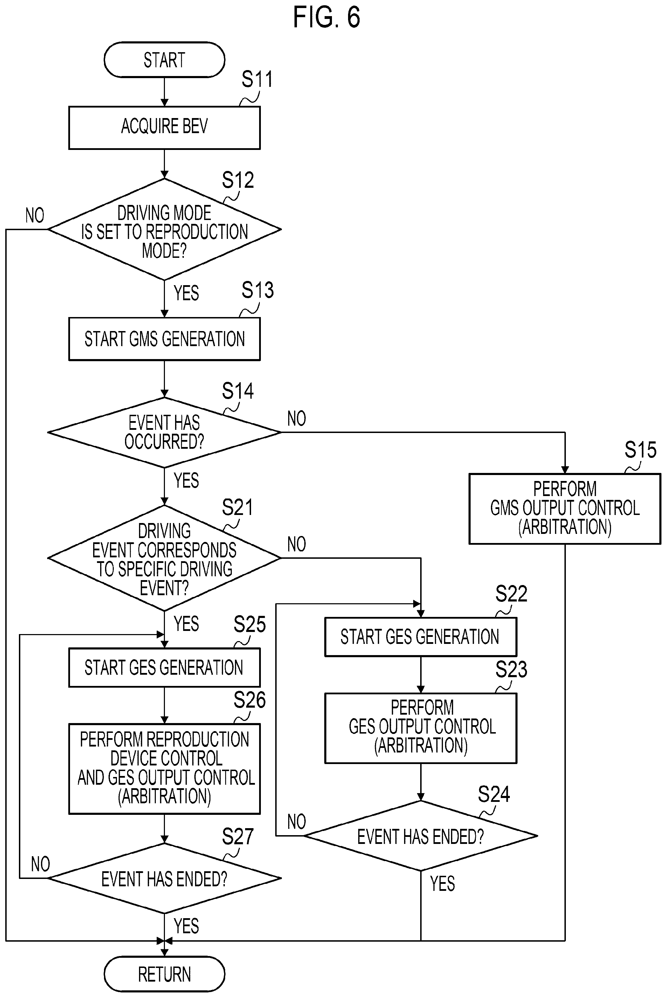

FIG. 6 is a flowchart showing a flow of computer processing particularly related to the embodiment. The flowchart shown in FIG. 6 is repeatedly executed in a predetermined control period of the processing circuit 102 shown in FIG. 1.

In the routine shown in FIG. 6, first, the information BEV is acquired (step S11). As described above, the information BEV is information regarding the battery electric vehicle 10, and includes information regarding the traveling state of the battery electric vehicle 10, information regarding the traveling environment of the battery electric vehicle 10, information regarding the driving mode or the control mode of the battery electric vehicle 10, the virtual engine rotation speed Ne, and the like.

Subsequently to the process of step S11, it is determined whether or not the driving mode of the battery electric vehicle 10 is set to a reproduction mode (step S12). The determination in step S12 is made based on the driving mode data BDM included in the information BDV. Here, the driving mode data BDM includes selection data of a basic mode and a reproduction mode. A difference between the basic mode and the reproduction mode lies at least in whether or not the virtual mobility sound is reproduced. When the reproduction mode is selected by the driver, a determination result in step S12 is affirmative.

When the determination result in step S12 is affirmative, the generation of the mobility sound data GMS is started (step S13). Then, it is determined whether or not the occurrence of the driving event has been detected (step S14). Whether or not the occurrence of the driving event has been detected is determined based on a combination of the information BEV and the virtual mobility specified by the driving mode data BDM.

For example, a start event and a stop event (common driving event) for the engine vehicle, the railroad vehicle, the aircraft, and the ship are detected by an operation of an ignition switch of the battery electric vehicle 10. A turning event (common driving event) of the engine vehicle, the aircraft, and the ship is detected by a change in steering angle of the battery electric vehicle 10. A station departure event of the railroad vehicle, a takeoff event of the aircraft, and a departure event of the ship from a shore (common driving event) are detected by a start operation of the battery electric vehicle 10. A station arrival event of the railroad vehicle and a docking event of the ship (common driving event) are detected when a distance from a destination of the battery electric vehicle 10 is within a predetermined distance.

A start event (specific driving event) of the railroad vehicle with the cargo vehicle is detected by a start operation of the battery electric vehicle 10, and a stop event (specific driving event) of the railroad vehicle is detected by a stop operation of the battery electric vehicle 10. A track traveling event (specific driving event) of the railroad vehicle is detected by traveling of the battery electric vehicle 10. A landing event (specific driving event) of the aircraft is detected when the distance from the destination of the battery electric vehicle 10 is within a predetermined distance.

When a determination result of step S14 is negative, the output control of the mobility sound data GMS is performed (step S15). In the process of step S15, the mobility sound data GMS is output from the speaker 14. In the process of step S 15, control arbitration is appropriately performed to prohibit the output of the mobility sound data GMS in a situation in which the emergency vehicle control is performed.

When the determination result of step S14 is affirmative, it is determined whether or not the driving event corresponds to the specific driving event (step S21). A determination target of the process of step S21 is the driving event detected in the process of step S14. The determination in step S21 is made based on the content of the driving event detected in the process of step S14.

When a determination result of step S21 is negative, the generation of the event sound data GES is started (step S22), and the output control of the event sound data GES is performed (step S23). In the process of step S23, the event sound data GES is output from the speaker 14. In the process of step S23, control arbitration is appropriately performed to prohibit the output of the event sound data GES in a situation in which the emergency vehicle control is performed.

Subsequently to the process of step S23, it is determined whether or not the driving event has ended (step S24). A determination target of the process of step S24 is the driving event detected in the process of step S14. The determination in step S24 is made, for example, by detecting cancellation of the driving operation or the vehicle state detected in the process of step S14. When a determination result of step S24 is negative, the process progresses to the process of step S22.

When the determination result of step S21 is affirmative, the generation of the event sound data GES is started (step S25). Then, the control of the reproduction device 16 and the output control of the event sound data GES are performed (step S26). In the process of step S26, the event sound data GES is output from the speaker 14. In addition, in the process of step S26, control arbitration is performed in which the output of the event sound data GES is started before the control of the reproduction device 16. Further, in the process of step S26, control arbitration is appropriately performed to prohibit the output of the event sound data GES and the control of the reproduction device 16 in a situation in which the emergency vehicle control is performed.

Subsequently to the process of step S26, it is determined whether or not the driving event has ended (step S27). The content of the process of step S27 is the same as the content of the process of step S24. When a determination result of step S27 is negative, the process progresses to the process of step S25.

4. Application to Battery Electric Vehicle Having Manual Mode (MT Mode)

An electric motor used as a traveling power device in a general battery electric vehicle has a torque characteristic that is significantly different from a torque characteristic of an internal combustion engine used as a traveling power device in a conventional vehicle (CV). Due to the difference in torque characteristic of the power device, a transmission is indispensable for the CV, whereas the battery electric vehicle is generally not equipped with a transmission. Of course, a general battery electric vehicle is not equipped with a manual transmission (MT) that switches a gear ratio via a manual operation of the driver. Therefore, there is a significant difference in driving sensation between driving of a conventional vehicle with the MT (hereinafter, also referred to as an "MT vehicle") and driving of the battery electric vehicle.

On the other hand, the electric motor can relatively easily control a torque by controlling an applied voltage or a magnetic field. Accordingly, with appropriate control, it is possible for the electric motor to obtain a desired torque characteristic within an operation range of the electric motor. By utilizing this feature, it is possible to control the torque of the battery electric vehicle and simulate a torque characteristic specific to the MT vehicle. In addition, the battery electric vehicle can be provided with a pseudo shifter so that the driver can get driving sensation like the MT vehicle. Whereby, it is possible to simulate the MT vehicle in the battery electric vehicle.

That is, the battery electric vehicle controls the output of the electric motor to simulate the torque characteristic specific to the MT vehicle. The driver operates the pseudo shifter to perform a pseudo manual gear shift operation. In response to the pseudo manual gear shift operation of the driver, the battery electric vehicle changes the torque characteristic by simulating the MT vehicle. As a result, the driver of the battery electric vehicle can have a feeling as if he or she is driving the MT vehicle. As described above, the control mode of the electric motor for simulating the manual gear shift operation of the MT vehicle is hereinafter also referred to as a "manual mode" or an "MT mode".

The battery electric vehicle 10 according to the present disclosure may have such a manual mode (MT mode). In the MT mode, the battery electric vehicle 10 generates a pseudo engine sound in response to the driving operation of the driver, and outputs the pseudo engine sound from the speaker 70. Since an engine sound of the MT vehicle is reproduced as well as the driving operation of the MT vehicle, a degree of satisfaction of the driver who seeks realism increases.

Hereinafter, a configuration example of the battery electric vehicle 10 having the manual mode (MT mode) will be described.

4-1. First Configuration Example

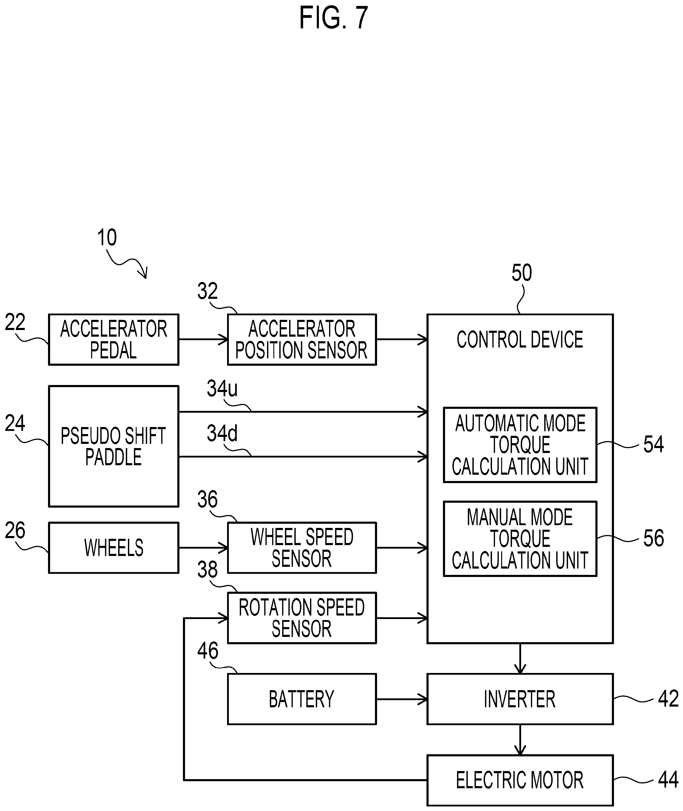

FIG. 7 is a block diagram showing a first configuration example of a power control system of the battery electric vehicle 10. The battery electric vehicle 10 includes the electric motor 44, a battery 46, and an inverter 42. The electric motor 44 is a traveling power device. The battery 46 stores electric energy for driving the electric motor 44. That is, the battery electric vehicle 10 is a battery electric vehicle (BEV) that travels with electric energy stored in the battery 46. The inverter 42 converts a direct current electric power input from the battery 46 during acceleration into a drive electric power of the electric motor 44. In addition, the inverter 42 converts a regenerative electric power input from the electric motor 44 during deceleration into a direct current electric power, which is used to charge the battery 46.

The battery electric vehicle 10 includes an accelerator pedal 22 for the driver to input an acceleration request to the battery electric vehicle 10. An accelerator position sensor 32 for detecting an accelerator operation amount is provided in the accelerator pedal 22.

The battery electric vehicle 10 includes a pseudo shift paddle 24. The pseudo shift paddle 24 is a dummy different from an original paddle-type shifter. The pseudo shift paddle 24 has a structure simulating a shift paddle provided in a clutch pedal-less MT vehicle. The pseudo shift paddle 24 is attached to the steering wheel. The pseudo shift paddle 24 includes an upshift switch and a downshift switch that decide an operation position. The upshift switch issues an upshift signal 34u when pulled forward, and the downshift switch issues a downshift signal 34d when pulled forward.

Wheels 26 of the battery electric vehicle 10 are provided with a wheel speed sensor 36. The wheel speed sensor 36 is used as a vehicle speed sensor for detecting a vehicle speed of the battery electric vehicle 10. In addition, the electric motor 44 is provided with a rotation speed sensor 38 for detecting a rotation speed of the electric motor 44.

The battery electric vehicle 10 includes a control device 50. The control device 50 is typically an electronic control unit (ECU) mounted in the battery electric vehicle 10. The control device 50 may be a combination of a plurality of ECUs. The control device 50 includes an interface, a memory, and a processor. An in-vehicle network is connected to the interface. The memory includes a RAM that temporarily records data and a ROM that stores a program executable by the processor and various data related to the program. The program is formed of a plurality of instructions. The processor reads out and executes a program or data from the memory, and generates a control signal based on a signal acquired from each sensor.

For example, the control device 50 controls the electric motor 44 through PWM control of the inverter 42. The control device 50 receives signals from the accelerator position sensor 32, the pseudo shift paddle 24, the wheel speed sensor 36, and the rotation speed sensor 38 (the signals from the pseudo shift paddle 24 are the upshift signal 34u and the downshift signal 34d). The control device 50 processes these signals and calculates a motor torque command value for PWM control of the inverter 42.

The control device 50 includes an automatic mode (EV mode) and a manual mode (MT mode) as a control mode. The automatic mode is a normal control mode for driving the battery electric vehicle 10 as a general battery electric vehicle. The automatic mode is programmed to continuously change the output of the electric motor 44 in response to an operation of the accelerator pedal 22. Meanwhile, the manual mode is a control mode for driving the battery electric vehicle 10 in the same manner as the MT vehicle. The manual mode is programmed to change an output characteristic of the electric motor 44 for the operation of the accelerator pedal 22 in response to an upshift operation and a downshift operation for the pseudo shift paddle 24. That is, the manual mode is control mode in which the output of the electric motor 44 can be changed in response to a driving operation of a vehicle component other than the accelerator pedal 22 or the brake pedal. The automatic mode (EV mode) and the manual mode (MT mode) are switchable.

The control device 50 includes an automatic mode torque calculation unit 54 and a manual mode torque calculation unit 56. Each of the units 54, 56 may be an independent ECU, or may have an ECU function obtained by the program recorded in the memory being executed by the processor.

The automatic mode torque calculation unit 54 has a function of calculating a motor torque when the electric motor 44 is controlled in the automatic mode. The automatic mode torque calculation unit 54 stores a motor torque command map. The motor torque command map is a map for deciding a motor torque from the accelerator operation amount and the rotation speed of the electric motor 44. The signal of the accelerator position sensor 32 and the signal of the rotation speed sensor 38 are input to each parameter of the motor torque command map. A motor torque corresponding to these signals is output from the motor torque command map. Therefore, in the automatic mode, even when the driver operates the pseudo shift paddle 24, the operation is not reflected in the motor torque.

The manual mode torque calculation unit 56 includes an MT vehicle model. The MT vehicle model is a model for calculating a drive wheel torque to be obtained by operating the accelerator pedal 22 and the pseudo shift paddle 24 when the battery electric vehicle 10 is assumed to be an MT vehicle.

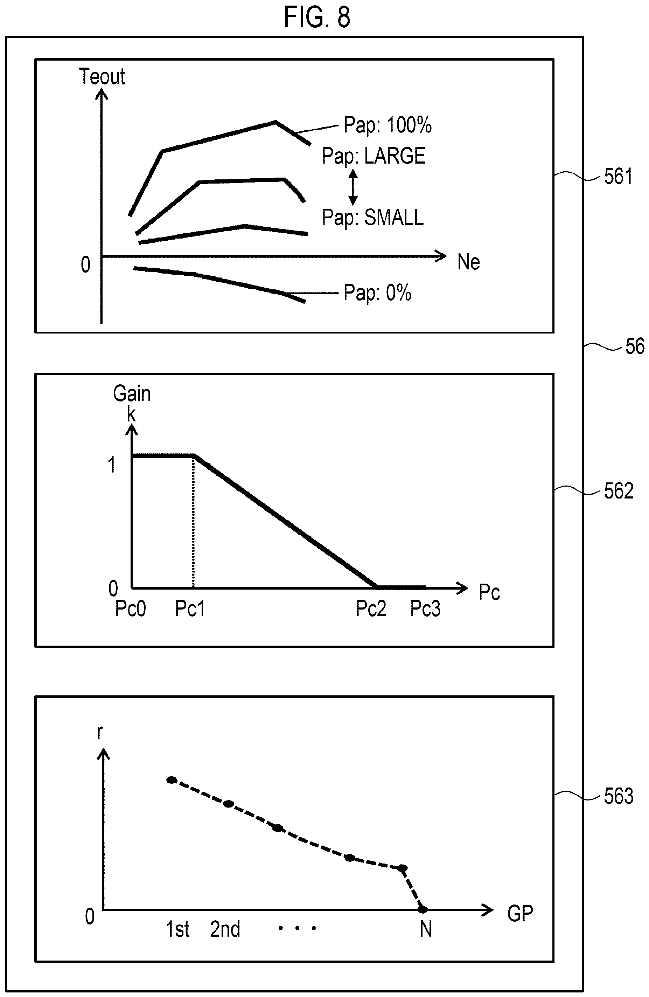

The MT vehicle model included in the manual mode torque calculation unit 56 will be described with reference to FIG. 8. As shown in FIG. 8, the MT vehicle model includes an engine model 561, a clutch model 562, and a transmission model 563. The engine, the clutch, and the transmission that are virtually implemented by the MT vehicle model are referred to as a virtual engine, a virtual clutch, and a virtual transmission, respectively. In the engine model 561, the virtual engine is modeled. In the clutch model 562, the virtual clutch is modeled. In the transmission model 563, the virtual transmission is modeled.

The engine model 561 calculates a virtual engine rotation speed Ne and a virtual engine output torque Teout. The virtual engine rotation speed Ne is calculated based on a wheel rotation speed Nw, a total reduction ratio R, and a slip ratio Rslip of the virtual clutch. For example, the virtual engine rotation speed Ne is represented by Formula (1).

$$\text{Formula (1): } Ne = Nw \times R/(1 - Rslip)$$

The virtual engine output torque Teout is calculated from the virtual engine rotation speed Ne and an accelerator operation amount Pap. As shown in FIG. 8, a map in which a relationship between the accelerator operation amount Pap, the virtual engine rotation speed Ne, and the virtual engine output torque Teout is defined is used for calculating the virtual engine output torque Teout. In this map, the virtual engine output torque Teout with respect to the virtual engine rotation speed Ne is given for each accelerator operation amount Pap. The torque characteristic shown in FIG. 8 can be set to a characteristic assumed for a gasoline engine or can be set to a characteristic assumed for a diesel engine. In addition, the torque characteristic can be set to a characteristic assumed for a naturally aspirated engine or can be set to a characteristic assumed for a supercharge engine.

The clutch model 562 calculates a torque transmission gain k. The torque transmission gain k is a gain for calculating a degree of torque transmission of the virtual clutch corresponding to a virtual clutch operation amount Pc. The virtual clutch operation amount Pc is normally 0%, and is temporarily increased to 100% in conjunction with switching of a virtual gear stage of the virtual transmission. The clutch model 562 has a map as shown in FIG. 8. In the map, the torque transmission gain k is given with respect to the virtual clutch operation amount Pc. In FIG. 8, Pc0 corresponds to a position where the virtual clutch operation amount Pc is 0%, and Pc3 corresponds to a position where the virtual clutch operation amount Pc is 100%. A range from Pc0 to Pc1 and a range from Pc2 to Pc3 are dead zones in which the torque transmission gain k does not change regardless of the virtual clutch operation amount Pc. The clutch model 562 calculates a clutch output torque Tcout using the torque transmission gain k. The clutch output torque Tcout is a torque output from the virtual clutch. For example, the clutch output torque Tcout is given by a product of the virtual engine output torque Teout and the torque transmission gain k ($Tcout = Teout \times k$).

In addition, the clutch model 562 calculates the slip ratio Rslip. The slip ratio Rslip is used to calculate the virtual engine rotation speed Ne in the engine model 561. In the calculation of the slip ratio Rslip, a map in which the slip ratio Rslip is given with respect to the virtual clutch operation amount Pc can be used, as in a case of the torque transmission gain k.

The transmission model 563 calculates a gear ratio r. The gear ratio r is a gear ratio determined by a virtual gear stage GP in the virtual transmission. The virtual gear stage GP is upshifted by one stage in response to the upshift operation of the pseudo shift paddle 24. On the other hand, the virtual gear stage GP is downshifted by one stage in response to the downshift operation of the pseudo shift paddle 24. The transmission model 563 has a map as shown in FIG. 8. In the map, the gear ratio r is given to the virtual gear stage GP such that the gear ratio r decreases as the virtual gear stage GP increases. The transmission model 563 calculates a transmission output torque Tgout by using the gear ratio r and the clutch output torque Tcout obtained from the map. For example, the transmission output torque Tgout is given by a product of the clutch output torque Tcout and the gear ratio r ($Tgout = Tcout \times r$). The transmission output torque Tgout discontinuously changes in response to the switching of the gear ratio r. The change in the discontinuous transmission output torque Tgout generates a gear shift shock, and a sense of realism typical of a vehicle including a stepped transmission is created.

The MT vehicle model calculates a drive wheel torque Tw by using a predetermined reduction ratio rr. The reduction ratio rr is a fixed value determined by the mechanical structure from the virtual transmission to the drive wheels. The value obtained by multiplying the gear ratio r by the reduction ratio rr is the total reduction ratio R. The MT vehicle model calculates the drive wheel torque Tw from the transmission output torque Tgout and the reduction ratio rr. For example, the drive wheel torque Tw is given by a product of the transmission output torque Tgout and the reduction ratio rr ($Tw = Tgout \times rr$).

The control device 50 converts the drive wheel torque Tw calculated by the MT vehicle model into a requested motor torque Tm. The requested motor torque Tm is a motor torque needed to implement the drive wheel torque Tw calculated by the MT vehicle model. For the conversion of the drive wheel torque Tw into the requested motor torque Tm, the reduction ratio from an output shaft of the electric motor 44 to the drive wheels is used. Then, the control device 50 controls the inverter 42 in accordance with the requested motor torque Tm to control the electric motor 44.

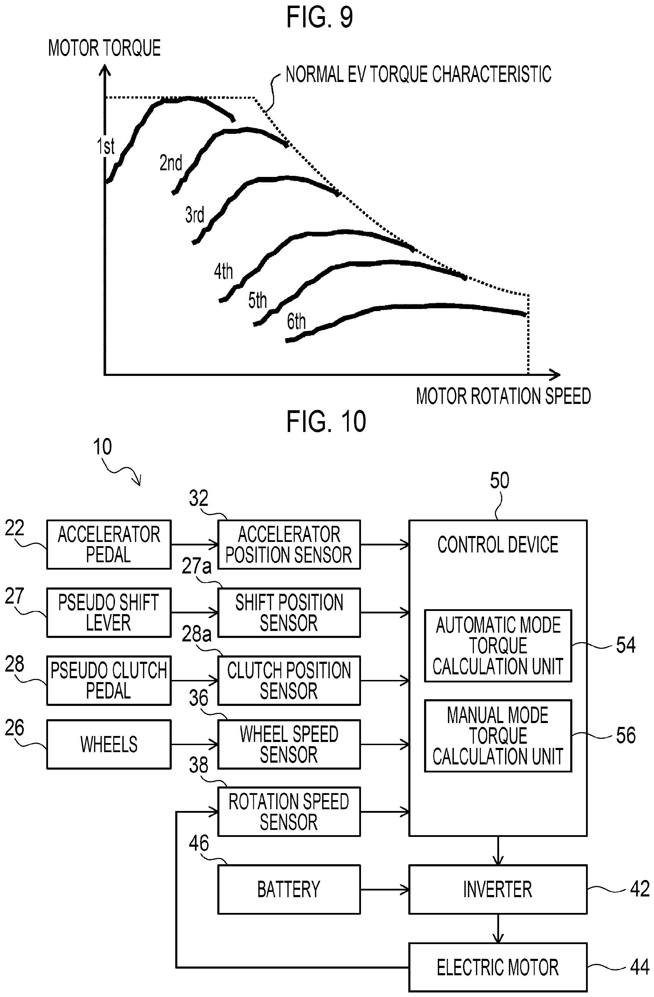

FIG. 9 is a graph showing the torque characteristic of the electric motor 44 implemented by the motor control using the MT vehicle model as compared with the torque characteristic of the electric motor 44 implemented by normal motor control as an electric vehicle (EV). With the motor control using the MT vehicle model, as shown in FIG. 9, the torque characteristic (solid line in FIG. 9) that simulates the torque characteristic of the MT vehicle can be implemented according to the virtual gear stage set by the pseudo shift paddle 24. In FIG. 9, the number of gear stages is six.

### 4-2. Second Configuration Example

FIG. 10 is a block diagram showing a second configuration example of the power control system of the battery electric vehicle 10. Here, solely a configuration different from the first configuration example will be described. Specifically, in the second configuration example, the battery electric vehicle 10 includes a pseudo shift lever 27 and a pseudo clutch pedal 28 instead of the pseudo shift paddle 24 provided in the first configuration example. The pseudo shift lever 27 and the pseudo clutch pedal 28 are merely dummies different from the original shift lever and clutch pedal.

The pseudo shift lever 27 has a structure that simulates a shift lever provided in the MT vehicle. The disposition and the operation feeling of the pseudo shift lever 27 are the same as the disposition and the operation feeling of the actual MT vehicle. The pseudo shift lever 27 has positions corresponding to each gear stage, for example, first gear, second gear, third gear, fourth gear, fifth gear, sixth gear, reverse, and neutral. The pseudo shift lever 27 is provided with a shift position sensor 27a that detects the gear stage by discriminating the position of the pseudo shift lever 27.

The pseudo clutch pedal 28 has a structure that simulates a clutch pedal provided in the MT vehicle. The disposition and the operation feeling of the pseudo clutch pedal 28 are the same as the disposition and the operation feeling of the actual MT vehicle. The pseudo clutch pedal 28 is operated when the pseudo shift lever 27 is operated. That is, the driver depresses the pseudo clutch pedal 28 when the driver wishes to change the gear stage settings by using the pseudo shift lever 27, and in a case where the gear stage settings have been changed, the driver releases and returns the pseudo clutch pedal 28 to the original position. The pseudo clutch pedal 28 is provided with a clutch position sensor 28a for detecting a depression amount of the pseudo clutch pedal 28.

The control device 50 receives signals from the accelerator position sensor 32, the shift position sensor 27a, the clutch position sensor 28a, the wheel speed sensor 36, and the rotation speed sensor 38. The control device 50 processes these signals and calculates a motor torque command value for PWM control of the inverter 42.

The control device 50 includes an automatic mode and a manual mode as a control mode, as in the first configuration example. The automatic mode is programmed to continuously change the output of the electric motor 44 in response to an operation of the accelerator pedal 22. Meanwhile, the manual mode is a control mode for driving the battery electric vehicle 10 in the same manner as the MT vehicle. The manual mode is programmed to change the output of the electric motor 44 for the operation of the accelerator pedal 22 in response the operation of the pseudo clutch pedal 28 and the pseudo shift lever 27. That is, the manual mode is control mode in which the output of the electric motor 44 can be changed in response to a driving operation of a vehicle component other than the accelerator pedal 22 or the brake pedal.

The vehicle model included in the manual mode torque calculation unit 56 is the same as the vehicle model shown in FIG. 8. Note that the virtual clutch operation amount Pc is replaced with the depression amount of the pseudo clutch pedal 28 detected by the clutch position sensor 28a. In addition, the virtual gear stage GP is decided by the position of the pseudo shift lever 27 detected by the shift position sensor 27a.

## Claims

1. A vehicle control method that is applied to a battery electric vehicle (10) that uses an electric motor (44) as a traveling power device, the vehicle control method comprising:

   detecting occurrence of a driving event specific to a virtual mobility when a reproduction mode for reproducing behavior of the virtual mobility in a driving event of the virtual mobility is selected as a driving mode of the battery electric vehicle (10); and
   performing event reproduction control including driving of an in-vehicle device simulating a behavior characteristic of the virtual mobility in the specific driving event and reproduction of a pseudo event sound simulating a sound in the specific driving event, when the occurrence of the specific driving event is detected,
   wherein, in the event reproduction control, the reproduction of the pseudo event sound is started prior to the driving of the in-vehicle device.

2. The vehicle control method according to claim 1, wherein the driving of the in-vehicle device is started after the pseudo event sound reproduced by executing the event reproduction control is detected via an indoor microphone of the battery electric vehicle (10).

3. The vehicle control method according to claim 1, wherein, when a setting state of a sound reproducing device configured to reproduce the pseudo event sound in the battery electric vehicle (10) is a mute state, the mute state is released before the reproduction of the pseudo event sound is started in the event reproduction control.

4. The vehicle control method according to claim 1, further comprising:

   detecting occurrence of a driving event common to the virtual mobility and the battery electric vehicle (10) when a reproduction mode for reproducing a sound of the virtual mobility in the driving event of the virtual mobility is selected as the driving mode; and
   performing event reproduction control including at least one of driving of the in-vehicle device simulating a behavior characteristic of the virtual mobility in the common driving event and reproduction of a pseudo event sound simulating a sound in the common driving event, when the occurrence of the common driving event is detected.

5. The vehicle control method according to any one of claims 1 to 4, wherein:

   the virtual mobility includes a railroad vehicle with a cargo vehicle; and
   the specific driving event includes a departure event of the railroad vehicle detected by start of the battery electric vehicle (10) and a stop event of the railroad vehicle detected by stop of the battery electric vehicle (10).

6. The vehicle control method according to any one of claims 1 to 4, wherein:

> the virtual mobility includes a railroad vehicle; and
> the specific driving event includes a track traveling event of the railroad vehicle detected by traveling of the battery electric vehicle (10).

7. The vehicle control method according to any one of claims 1 to 4, wherein:

> the virtual mobility includes an aircraft; and
> the specific driving event includes a landing event of the aircraft at a destination, the landing event being detected when a distance from the battery electric vehicle (10) to the destination is within a predetermined distance.

8. A vehicle control device (100) that is applied to a battery electric vehicle (10) that uses an electric motor (44) as a traveling power device, the vehicle control device (100) comprising:

> a processing circuit (102) configured to perform various kinds of processing,
> wherein the processing circuit (102) is configured to
>
> > detect occurrence of a driving event specific to a virtual mobility when a reproduction mode for reproducing behavior of the virtual mobility in a driving event of the virtual mobility is selected as a driving mode of the battery electric vehicle (10),
> > perform event reproduction control including driving of an in-vehicle device simulating a behavior characteristic of the virtual mobility in the specific driving event and reproduction of a pseudo event sound simulating a sound in the specific driving event, when the occurrence of the specific driving event is detected, and
> > start the reproduction of the pseudo event sound prior to the driving of the in-vehicle device in the event reproduction control.

9. The vehicle control device (100) according to claim 8, wherein the processing circuit (102) is configured to start the driving of the in-vehicle device after the pseudo event sound reproduced by executing the event reproduction control is detected via an indoor microphone of the battery electric vehicle (10).

10. The vehicle control device (100) according to claim 8, wherein the processing circuit (102) is configured to, when a setting state of a sound reproducing device configured to reproduce the pseudo event sound in the battery electric vehicle (10) is a mute state, release the mute state before the reproduction of the pseudo event sound is started in the event reproduction control.

11. The vehicle control device (100) according to claim 8, wherein the processing circuit (102) is further configured to

> detect occurrence of a driving event common to the virtual mobility and the battery electric vehicle (10) when a reproduction mode for reproducing a sound of the virtual mobility in the driving event of the virtual mobility is selected as the driving mode, and
> perform event reproduction control including at least one of driving of the in-vehicle device simulating a behavior characteristic of the virtual mobility in the common driving event and reproduction of a pseudo event sound simulating a sound in the common driving event, when the occurrence of the common driving event is detected.

12. The vehicle control device (100) according to any one of claims 8 to 11, wherein:

> the virtual mobility includes a railroad vehicle with a cargo vehicle; and
> the processing circuit (102) is configured to detect occurrence of a departure event of the railroad vehicle detected by start of the battery electric vehicle (10) and a stop event of the railroad vehicle detected by stop of the battery electric vehicle (10) as the specific driving event.

13. The vehicle control device (100) according to any one of claims 8 to 11, wherein:

> the virtual mobility includes a railroad vehicle; and
> the processing circuit (102) is configured to detect occurrence of a track traveling event of the railroad vehicle detected by traveling of the battery electric vehicle (10) as the specific driving event.

14. The vehicle control device (100) according to any one of claims 8 to 11, wherein:

> the virtual mobility includes an aircraft; and
> the processing circuit (102) is configured to detect occurrence of a landing event of the aircraft at a destination as the specific driving event, the landing event being detected when a distance from the battery electric vehicle (10) to the destination is within a predetermined distance.

# FIG. 1

VEHICLE CONTROL DEVICE 100

PROCESSING CIRCUIT 102

STORAGE DEVICE 104

10

ELECTRIC MOTOR 44

SENSOR 12

SPEAKER 14

REPRODUCTION DEVICE 16

HMI UNIT 18

# FIG. 2

100

SOUND SOURCE MANAGEMENT UNIT 120

VMS1 ··· VMSn

INFORMATION ACQUISITION UNIT 110

12 →

BEV

SOUND GENERATION UNIT 130

VMSk

GMS

SOUND OUTPUT CONTROLLER 140

→ 14

MODE SETTING UNIT 150

BDM

## FIG. 3

## FIG. 4

# FIG. 5

GMS

GES

ANNOUNCEMENT SOUND

BEHAVIOR REPRODUCTION

T1    T2 T4    T3    TIME T

# FIG. 6

```
                    ┌─────────┐
                    │  START  │
                    └─────────┘
                         │    S11
                         ▼
              ┌─────────────────────┐
              │     ACQUIRE BEV      │
              └─────────────────────┘
                         │    S12
                         ▼
                    ╱─────────╲
        NO      ╱   DRIVING MODE   ╲
   ◄───────────  IS SET TO REPRODUCTION
                ╲      MODE?       ╱
                    ╲─────────╱
                         │ YES   S13
                         ▼
              ┌─────────────────────┐
              │ START GMS GENERATION │
              └─────────────────────┘
                         │    S14
                         ▼
                    ╱─────────╲         NO
                   ╱ EVENT HAS  ╲──────────────►
                   ╲ OCCURRED?  ╱                    S15
                    ╲─────────╱              ┌──────────────────┐
                         │ YES              │     PERFORM      │
                         ▼                  │ GMS OUTPUT CONTROL│
                    ╱─────────╲             │   (ARBITRATION)  │
                   ╱  DRIVING   ╲  NO        └──────────────────┘
                  ╱ EVENT CORRESPONDS╲────┐
                  ╲ TO SPECIFIC DRIVING   │
                   ╲    EVENT?   ╱         ▼
                    ╲─────────╱      ┌──────────────────┐
          S25            │ YES       │ START GES GENERATION│   S22
                         ▼           └──────────────────┘
              ┌─────────────────────┐         │    S23
              │ START GES GENERATION │         ▼
              └─────────────────────┘  ┌──────────────────┐
                         │    S26      │     PERFORM      │
                         ▼             │ GES OUTPUT CONTROL│
              ┌─────────────────────┐  │   (ARBITRATION)  │
              │ PERFORM REPRODUCTION │  └──────────────────┘
              │    DEVICE CONTROL    │         │    S24
              │ AND GES OUTPUT CONTROL│        ▼
              │    (ARBITRATION)     │    ╱─────────╲
              └─────────────────────┘ NO╱ EVENT HAS  ╲
                         │    S27   ◄────╲  ENDED?   ╱
                         ▼               ╲─────────╱
                    ╱─────────╲               │ YES
           NO      ╱ EVENT HAS  ╲             │
         ◄─────────╲  ENDED?   ╱              │
                    ╲─────────╱               │
                         │ YES                │
                         ▼                    │
                    ┌─────────┐               │
                    │ RETURN  │◄──────────────┘
                    └─────────┘
```

# FIG. 7

10

22 ACCELERATOR PEDAL

32 ACCELERATOR POSITION SENSOR

50 CONTROL DEVICE

24 PSEUDO SHIFT PADDLE

34u

34d

AUTOMATIC MODE TORQUE CALCULATION UNIT — 54

MANUAL MODE TORQUE CALCULATION UNIT — 56

26 WHEELS

36 WHEEL SPEED SENSOR

38 ROTATION SPEED SENSOR

46 BATTERY

INVERTER — 42

ELECTRIC MOTOR — 44

# FIG. 8

## FIG. 9

## FIG. 10

Europäisches
Patentamt

European
Patent Office

Office européen
des brevets

## EUROPEAN SEARCH REPORT

**Application Number**

EP 25 15 8017

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/063494 A1 (DUO' JONATHAN [IT] ET AL) 3 March 2022 (2022-03-03) | 1-3, 5-10, 12-14 | INV. B60L3/00 B60L15/20 |
| Y | * paragraphs [0001] - [0266] * <br> * figures 1-11 * | 4,11 | B60L58/12 B60W30/188 B60Q5/00 |
| X | JP 2021 113941 A (MAZDA MOTOR) 5 August 2021 (2021-08-05) | 1-3, 5-10, 12-14 | |
| Y | * paragraphs [0001] - [0067] * <br> * figures 1-7 * | 4,11 | |
| X | US 2021/229550 A1 (ISAMI YOICHIRO [JP]) 29 July 2021 (2021-07-29) <br> * paragraphs [0002] - [0090]; figures 1-9 * | 1-14 | |
| A | US 11 554 677 B2 (TOYOTA MOTOR CO LTD [JP]) 17 January 2023 (2023-01-17) <br> * the whole document * | 1-14 | |

**TECHNICAL FIELDS SEARCHED (IPC)**

B60W
B60L
B60Q

The present search report has been drawn up for all claims

| Place of search | Date of completion of the search | Examiner |
|---|---|---|
| The Hague | 20 June 2025 | Hagan, Colm |

EPO FORM 1503 03.82 (P04C01)

## ANNEX TO THE EUROPEAN SEARCH REPORT
## ON EUROPEAN PATENT APPLICATION NO.

EP 25 15 8017

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | Publication date | Patent family member(s) | Publication date |
|---|---|---|---|
| US 2022063494 A1 | 03-03-2022 | CN 113165531 A | 23-07-2021 |
| | | EP 3877204 A1 | 15-09-2021 |
| | | US 2022063494 A1 | 03-03-2022 |
| | | US 2025050807 A1 | 13-02-2025 |
| | | WO 2020095280 A1 | 14-05-2020 |
| JP 2021113941 A | 05-08-2021 | CN 113212299 A | 06-08-2021 |
| | | DE 102020007839 A1 | 22-07-2021 |
| | | JP 2021113941 A | 05-08-2021 |
| | | US 2021221286 A1 | 22-07-2021 |
| US 2021229550 A1 | 29-07-2021 | CN 113147419 A | 23-07-2021 |
| | | EP 3854626 A1 | 28-07-2021 |
| | | JP 6787507 B1 | 18-11-2020 |
| | | JP 2021118569 A | 10-08-2021 |
| | | US 2021229550 A1 | 29-07-2021 |
| US 11554677 B2 | 17-01-2023 | CN 113147419 A | 23-07-2021 |
| | | EP 3854626 A1 | 28-07-2021 |
| | | JP 6787507 B1 | 18-11-2020 |
| | | JP 2021118569 A | 10-08-2021 |
| | | US 2021229550 A1 | 29-07-2021 |

EPO FORM P0459

For more details about this annex : see Official Journal of the European Patent Office, No. 12/82

**REFERENCES CITED IN THE DESCRIPTION**

**Patent documents cited in the description**

- JP 2011215437 A